# EUROPEAN PATENT SPECIFICATION

(11) **EP 4 124 447 B1**
(45) Date of publication and mention of the grant of the patent: **03.09.2025**
(21) Application number: 22187584.2
(22) Date of filing: 28.07.2022
(51) Int. Cl.: B29D 30/00

(54) **MANUFACTURING METHOD OF TIRE HAVING SENSOR CONTAINER**
HERSTELLUNGSVERFAHREN EINES REIFENS MIT SENSORBEHÄLTER
PROCÉDÉ DE FABRICATION D'UN PNEU DOTÉ D'UN RÉCIPIENT DE CAPTEUR

(30) Priority: 28.07.2021 KR 20210099124
(43) Date of publication of application: 01.02.2023
(73) Proprietor: HANKOOK TIRE & TECHNOLOGY CO., LTD, Gyeonggi-do 13494 (KR)
(72) Inventor: KIM, Byung Lip, Yuseong-gu, Daejeon 34200 (KR); LEE, Kwang Yong, Sejong-si 30101 (KR)
(74) Representative: Stöckeler, Ferdinand

(56) References cited:
- EP-A1- 3 549 754
- WO-A1-2010/043264
- DE-A1- 102007 014 211
- DE-A1- 102007 030 231
- DE-A1- 102008 004 065
- DE-U1- 202005 005 144

## Description

### BACKGROUND OF THE INVENTION

### Field of the Invention

The present invention relates to a method for manufacturing a tire having a sensor container, and more particularly, to a method for manufacturing a tire having a sensor container for preventing the sensor container from falling off during high-speed driving.

### Description of the Related Art

Recently, various methods for attaching sensors to the inside of a tire have been devised in order to receive tire status information directly related to the safety of vehicle occupants in real time.

Products sold in the actual market are released in a way that adhesives are applied to an inner liner rubber inside a cured finished tire and then a cured container having a sensor is attached.

However, this method causes variations in the ambient environment such as temperature, pressure, and climatic conditions at the time of application of the adhesive, the amount of application and the magnitude of the force applied for adhesion.

Accordingly, as the heat generated from a tread is transmitted to the inside of the tire during high-speed driving, voids are occurred in the adhesive between the inner liner portion and the sensor container. As the voids occurred in this way gradually expanded, the movement of the sensor increased, making accurate sensing difficult. Further, in severe cases, there was a problem in that the adhesive was peeled off and the sensor inside the tire was damaged, damaging the tire and endangering the safety of the occupants.

In addition, since the use of adhesives is related to environmental pollution, it does not follow the policies of each tire manufacturer that are currently aiming for eco-friendly products.

In addition to this, for example, a method including curing a patch on the inner liner of a tire or forming a groove in the inner liner to attach a patch and curing, and then, removing the patch to insert a sensor has been proposed. However, since these technologies are often not practically applicable due to the complicated manufacturing process, in most cases, the container having sensors is attached to the inner liner using an adhesive.

EP 3 549 754 A1 discloses a vehicle tire in which a rubber container for receiving a tire module is arranged at a predetermined position on a tire inside, a placeholder of liquid silicone is inserted into the rubber container and the rubber container is firmly connected to a portion of the inside of the tire. After vulcanization, the placeholder is removed from the rubber container.

WO 2010/043264 A1 discloses a tyre comprising an electronic device and an anchoring body mounted on an internal surface of the tyre for engagement between the electronic device and the internal surface of the tyre. The anchoring body comprises a crosslinked elastomeric material obtained by crosslinking a crosslinkable elastomeric composition comprising a synthetic diene rubber and a halogenated butyl rubber.

Therefore, there is a need to develop a technology capable of permanently fixing a sensor container to a tire without using an adhesive while a manufacturing process is simple.

### Documents of Related Art

(Patent Document 1) Korean Registered Patent No. 1418214

### SUMMARY OF THE INVENTION

An object of the present invention to solve the above problems is to provide a method of manufacturing a tire having a sensor container for preventing the sensor container from falling off during high-speed driving.

The technical objects to be achieved by the present invention are not limited to the technical objects mentioned above, and other technical objects not mentioned can be clearly understood by those of ordinary skill in the art to which the present invention belongs from the description below.

The configuration of the present invention for achieving the above object provides a method for manufacturing a tire having a sensor container, including a) curing a container unit; b) forming a dummy by filling an inside of the cured container unit with a dummy material in which urethane and a curing agent are mixed; c) attaching the container unit including the dummy formed by curing to a tire; d) curing the tire to which the container unit is attached; e) removing the dummy included in the container unit attached to the cured tire; and f) mounting a sensor at a position where the dummy is removed.

In an embodiment of the present invention, in the step a), the container unit may be prepared to contain 0.1 to 99.5 % by weight of a filler material, 0.1 to 99.5 % by weight of oil, and 0.001 to 30 % by weight of sulfur.

In an embodiment of the present invention, the filler material may be made of a rubber-based material formed of a polymer mixture containing natural rubber and synthetic rubber, and may be made of any one or more of carbon, silica, and organic filler.

In an embodiment of the present invention, the oil may be a vegetable oil or a petroleum oil.

In an embodiment of the present invention, in the step a), the container unit may be provided to be cured at a temperature of 170 °C to 190 °C for 110 seconds to 130 seconds.

In an embodiment of the present invention, in the step b), the dummy material may be formed by mixing the urethane having a hardness of 1 to 100 and the curing agent in a ratio of 2:8 to 8:2.

In an embodiment of the present invention, in the step c), the container unit may be provided to be attached to any point inside the tire having an inner liner.

In an embodiment of the present invention, in the step d), the curing may be performed such that the container unit has a hardness of 10 to 100 and 100% modulus of 50 kgf/cm² or less.

In an embodiment of the present invention, in the step f), the sensor may be provided to be inserted into the container unit without applying an adhesive.

In an embodiment of the present invention, after the step f), the removed dummy may be provided to be recycled in the step c) and the step d) by omitting the step a) and the step b).

A tire manufactured by the method of manufacturing a tire has a sensor container, including the container unit cured and coupled to the tire; and the sensor inserted into the container unit.

The container unit may include a container side wall provided such that a lower portion thereof is integrated with the tire during the curing; a sensor mounting region formed inside the container side wall and formed of an empty space having a shape corresponding to an outer shape of the sensor; a container cover formed to cover an upper portion of the container side wall; and a sensor insertion hole formed in a central portion of the container cover.

A diameter of the sensor insertion hole may be provided to form a passage through which the sensor is inserted into the sensor mounting region and the container cover may be formed to fix the sensor inserted into the sensor mounting region not to be detached while driving.

The effect of the present invention according to the above configuration is that the sensor can be mounted on the tire without an adhesive by integrating the container unit with the inner liner of the tire or inner side of the tire.

Since the sensor can be mounted on the tire without an adhesive, when driving at high speed, there is no problem that the adhesive melts due to heat and voids occur.

In addition, since the dummy is used when curing the container unit to the tire, it is possible to prevent the container unit from being deformed and damaged by the pressure applied locally.

In addition, as the pressure of a bladder locally acts non-uniformly at the position where the container unit is formed, there is no problem affecting the tire quality.

It should be understood that the effects of the present invention are not limited to the above-described effects, and include all effects that can be inferred from the configuration of the invention described in the detailed description or claims of the present invention.

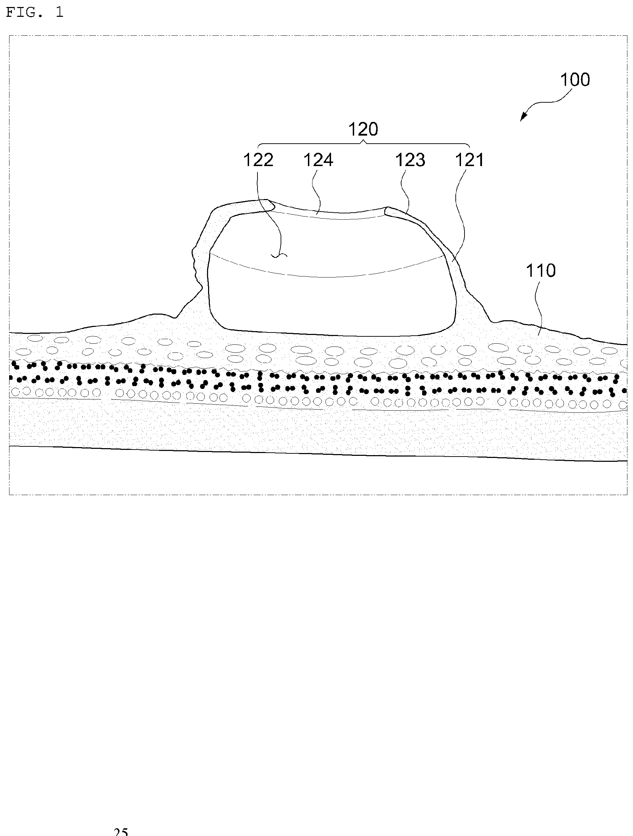

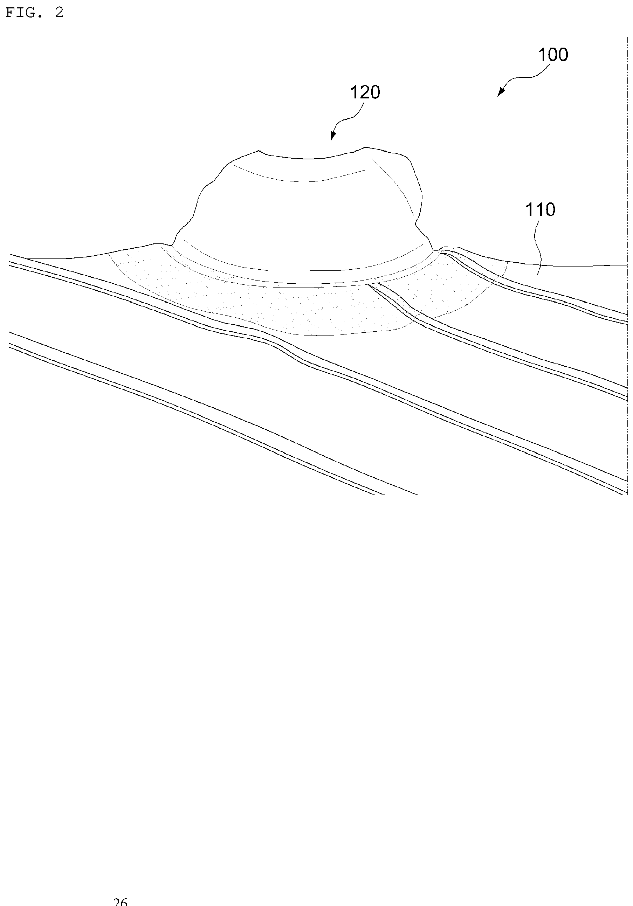

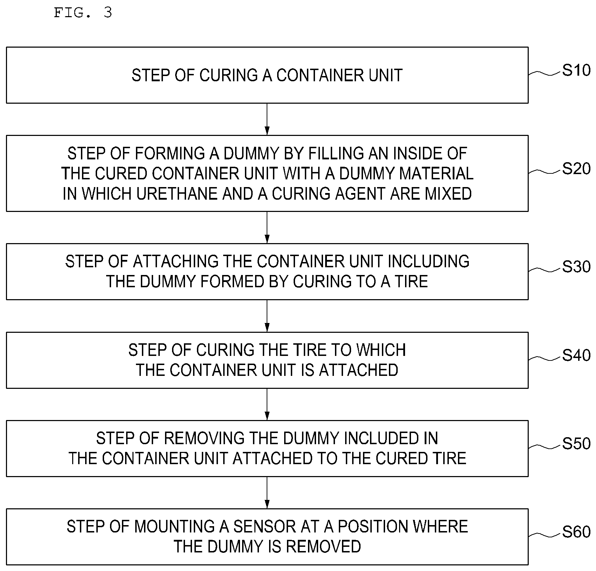

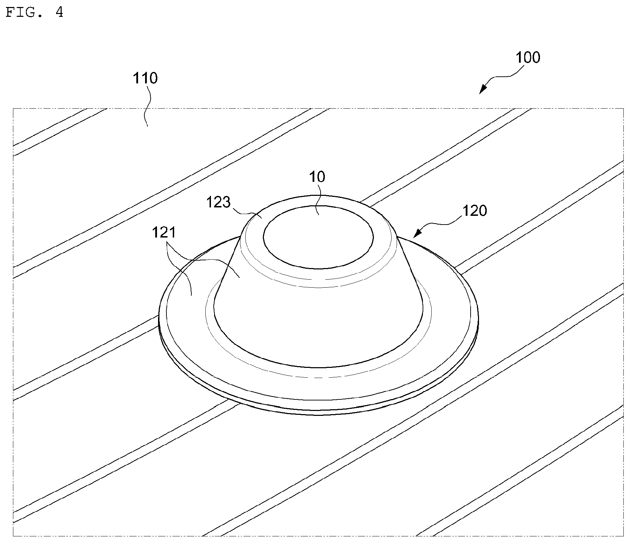

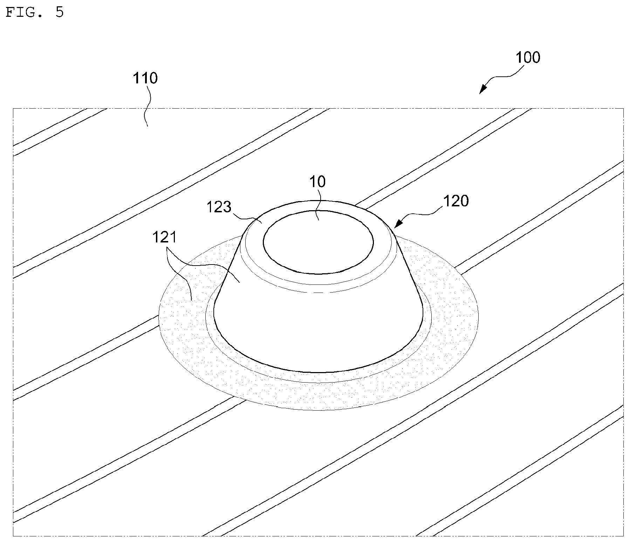

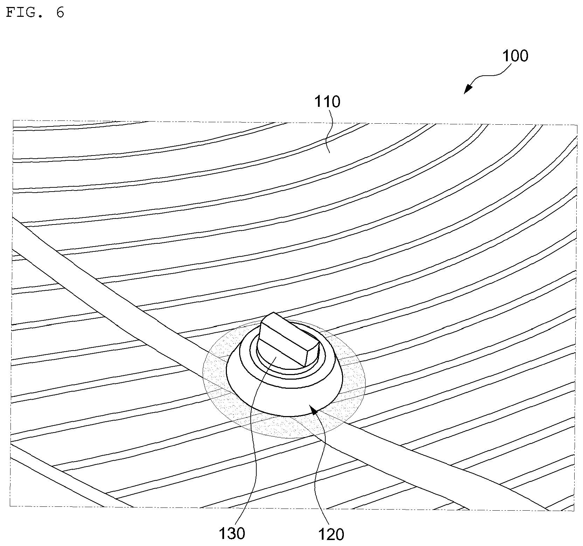

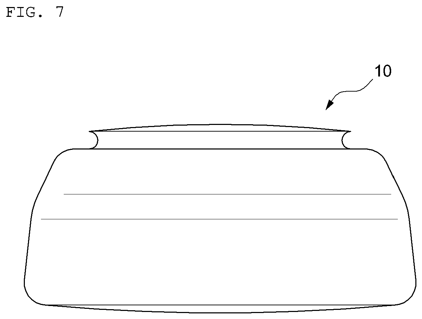

## Claims

1. A method for manufacturing a tire (110) comprising a sensor container, the method comprising the steps of:
a) curing (S10) a container unit (120);
b) forming (S20) a dummy (10) by filling an inside of the cured container unit (120) with a dummy material in which urethane and a curing agent are mixed;
c) attaching (S30) the container unit (120) including the dummy (10) formed by curing, to a tire (110);
d) curing (S40) the tire (110) to which the container unit (120) is attached;
e) removing (S50) the dummy (10) included in the container unit (120) attached to the cured tire (110); and
f) mounting (S60) a sensor (130) at a position where the dummy (10) is removed.

2. The method according to claim 1, wherein in the step a), the container unit (120) is prepared to contain 0.1 to 99.5 % by weight of a filler material, 0.1 to 99.5 % by weight of oil, and 0.001 to 30 % by weight of sulfur.

3. The method according to claim 2, wherein the filler material is made of a rubber-based material formed of a polymer mixture containing natural rubber and synthetic rubber, and is made of any one or more of carbon, silica, and organic filler.

4. The method according to claim 2, wherein the oil is a vegetable oil or a petroleum oil.

5. The method according to claim 1, wherein in the step a), the container unit (120) is provided to be cured at a temperature of 170 °C to 190 °C for 110 seconds to 130 seconds.

6. The method according to claim 1, wherein in the step b), the dummy material is formed by mixing the urethane having a hardness of 1 to 100 and the curing agent in a ratio of 2:8 to 8:2.

7. The method according to claim 1, wherein in the step c), the container unit (120) is provided to be attached to any point inside the tire having an inner liner.

8. The method according to claim 1, wherein in the step d), the curing is performed such that the container unit (120) has a hardness of 10 to 100 and 100% modulus of 50 kgf/cm² or less.

9. The method according to claim 1, wherein in the step f), the sensor is provided to be inserted into the container unit (120) without applying an adhesive.

10. The method according to claim 1, wherein after the step f), the removed dummy is provided to be recycled in the step c) and the step d) by omitting the step a) and the step b).

## Patentansprüche

1. Ein Verfahren zum Herstellen eines Reifens (110) mit einem Sensorbehälter, das folgende Schritte aufweist:
a) Härten (S10) einer Behältereinheit (120);
b) Bilden (S20) eines Dummys (10) durch Befüllen eines Inneren der gehärteten Behältereinheit (120) mit einem Dummy-Material, in dem Urethan und ein Härtungsmittel gemischt sind;
c) Anbringen (S30) der Behältereinheit (120), die den durch Härten gebildeten Dummy (10) enthält, an einem Reifen (110);
d) Härten (S40) des Reifens (110), an dem die Behältereinheit (120) angebracht ist;
e) Entfernen (S50) des Dummys (10), der in der Behältereinheit (120) enthalten ist, die an dem gehärteten Reifen (110) angebracht ist; und
f) Befestigen (S60) eines Sensors (130) an einer Position, an der der Dummy (10) entfernt wird.

2. Das Verfahren gemäß Anspruch 1, wobei in Schritt a) die Behältereinheit (120) derart hergestellt wird, dass sie 0,1 bis 99,5 Gew.-% eines Füllmaterials, 0,1 bis 99,5 Gew.-% an Öl und 0,001 bis 30 Gew.-% an Schwefel enthält.

3. Das Verfahren gemäß Anspruch 2, wobei das Füllmaterial aus einem gummibasierten Material, das aus einem Polymergemisch gebildet ist, das natürlichen und synthetischen Gummi enthält, besteht und aus Kohlenstoff, Silika und/oder organischem Füllmittel besteht.

4. Das Verfahren gemäß Anspruch 2, wobei das Öl ein pflanzliches Öl oder ein Erdöl ist.

5. Das Verfahren gemäß Anspruch 1, wobei die Behältereinheit (120) in Schritt a) dahingehend bereitgestellt wird, für 110 Sekunden bis 130 Sekunden bei einer Temperatur von 170 °C bis 190 °C gehärtet zu werden.

6. Das Verfahren gemäß Anspruch 1, wobei das Dummy-Material in Schritt b) durch Mischen des Urethans mit einer Härte von 1 bis 100 und des Härtemittels in einem Verhältnis von 2:8 bis 8:2 gebildet wird.

7. Das Verfahren gemäß Anspruch 1, wobei die Behältereinheit (120) in Schritt c) dahingehend bereitgestellt wird, an einem Punkt im Inneren des Reifens mit innerer Auskleidung angebracht zu werden.

8. Das Verfahren gemäß Anspruch 1, wobei das Härten in Schritt d) derart durchgeführt wird, dass die Behältereinheit (120) eine Härte von 10 bis 100 und einen 100%-Modul von 50 kgf/cm² oder weniger aufweist.

9. Das Verfahren gemäß Anspruch 1, wobei der Sensor in Schritt f) dahingehend bereitgestellt wird, ohne Auftragen von Haftmittel in die Behältereinheit (120) eingeführt zu werden.

10. Das Verfahren gemäß Anspruch 1, wobei der entfernte Dummy nach Schritt f) dahingehend bereitgestellt wird, in Schritt c) und Schritt d) durch Weglassen von Schritt a) und Schritt b) wiederverwendet zu werden.

## Revendications

1. Procédé de fabrication d'un pneu (110) comprenant un contenant de capteur, le procédé comprenant les étapes consistant à :
a) faire durcir (S10) une unité de contenant (120) ;
b) former (S20) un élément factice (10) en remplissant un intérieur de l'unité de contenant (120) durcie avec un matériau factice dans lequel sont mélangés de l'uréthane et un agent de durcissement ;
c) attacher (S30) à un pneu (110) l'unité de contenant (120) incluant l'élément factice (10) formé par durcissement ;
d) faire durcir (S40) le pneu (110) auquel est attachée l'unité de contenant (120) ;
e) retirer (S50) l'élément factice (10) inclus dans l'unité de contenant (120) attachée au pneu (110) durci ; et
f) monter (S60) un capteur (130) à une position où est retiré l'élément factice.

2. Procédé selon la revendication 1, dans lequel, à l'étape a), l'unité de contenant (120) est préparée pour contenir de 0,1 à 99,5 % en poids d'un matériau de remplissage, de 0,1 à 99,5 % en poids d'huile et de 0,001 à 30 % en poids de soufre.

3. Procédé selon la revendication 2, dans lequel le matériau de remplissage est composé d'un matériau à base de caoutchouc formé d'un mélange polymère contenant du caoutchouc naturel et du caoutchouc synthétique, et est composé d'un ou plusieurs quelconques parmi le carbone, la silice et une charge organique.

4. Procédé selon la revendication 2, dans lequel l'huile est une huile végétale ou une huile de pétrole.

5. Procédé selon la revendication 1, dans lequel, à l'étape a), l'unité de contenant (120) est prévue pour être durcie à une température de 170 °C à 190 °C pendant 110 secondes à 130 secondes.

6. Procédé selon la revendication 1, dans lequel, à l'étape b), le matériau factice est formé en mélangeant l'uréthane présentant une dureté de 1 à 100 et l'agent de durcissement selon un rapport de 2:8 à 8:2.

7. Procédé selon la revendication 1, dans lequel, à l'étape c), l'unité de contenant (120) est prévue pour être attachée à un point quelconque à l'intérieur du pneu présentant un revêtement intérieur.

8. Procédé selon la revendication 1, dans lequel, à l'étape d), le durcissement est effectué de telle sorte que l'unité de contenant (120) présente une dureté de 10 à 100 et un module à 100 % de 50 kgf/cm² ou moins.

9. Procédé selon la revendication 1, dans lequel, à l'étape f), le capteur est prévu pour être inséré dans l'unité de contenant (120) sans appliquer d'adhésif.

10. Procédé selon la revendication 1, dans lequel, après l'étape f), l'élément factice retiré est prévu pour être recyclé à l'étape c) et l'étape d) en omettant l'étape a) et l'étape b).
